# EUROPÄISCHE PATENTSCHRIFT

(11) **EP 3 650 888 B1**
(45) Veröffentlichungstag und Bekanntmachung des Hinweises auf die Patenterteilung: **23.12.2020**
(21) Anmeldenummer: 19202891.8
(22) Anmeldetag: 14.10.2019
(51) Int. Cl.: G01S 7/483, G01S 17/10, G01S 7/481, G01S 7/4863, G01S 7/4865

(54) **OPTOELEKTRONISCHER SENSOR UND VERFAHREN ZUR ERFASSUNG UND ABSTANDSBESTIMMUNG VON OBJEKTEN**
OPTOELECTRONIC SENSOR AND METHOD FOR RECORDING AND DETERMINING THE DISTANCE OF AN OBJECT
DÉTECTEUR OPTOÉLECTRONIQUE ET PROCÉDÉ DE DÉTECTION ET DE DÉTERMINATION DE DISTANCE DES OBJETS

(30) Priorität: 06.11.2018 DE 102018127635
(43) Veröffentlichungstag der Anmeldung: 13.05.2020
(73) Patentinhaber: SICK AG, 79183 Waldkirch (DE)
(72) Erfinder: Zwölfer, Ulrich, 79183 Waldkirch (DE)

(56) Entgegenhaltungen:
- EP-A1- 2 708 914
- US-A1- 2007 181 810
- US-B1- 10 088 559

## Beschreibung

Die Erfindung betrifft einen optoelektronischen Sensor und ein Verfahren zur Erfassung und Abstandsbestimmung von Objekten nach dem Oberbegriff von Anspruch 1 beziehungsweise 14.

Ein bekanntes Verfahren für die optische Abstandserfassung ist die Lichtlaufzeitmessung. Man unterscheidet die pulsbasierte und die phasenbasierte Messung. In einem Pulslaufzeitverfahren wird ein kurzer Lichtpuls ausgesandt und die Zeit bis zum Empfang des zurückkehrenden Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Lichtlaufzeit wird dann über die Lichtgeschwindigkeit in einen Abstand umgerechnet.

Eine Herausforderung bei der Lichtlaufzeitmessung ist die robuste Erfassung auch geringer Nutzlichtpegel. Dazu werden in einigen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Eine SPAD zählt somit wie ein Geigerzähler Einzelereignisse. SPADs sind nicht nur hochempfindlich, sondern auch vergleichsweise kostengünstig und effizient in Silizium-Halbleitern zu integrieren. Weiter lassen sie sich dann mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diesen Auswirkungen zu begegnen, werden in der Praxis mehrere SPADs gemeinsam ausgewertet.

Die Lichtlaufzeitmessung wird in optoelektronischen Sensoren unterschiedlicher Komplexität eingesetzt. Entfernungstaster messen nur in eine Richtung. In einem Laserscanner wird durch eine Schwenk- oder Rotationsbewegung mit einem entfernungsmessenden Abtaststrahl eine Ebene, manchmal auch ein Raumbereich abgetastet. Um auf die bewegliche Abtasteinheit zu verzichten, werden sogenannte Solid State Scanner vorgeschlagen. Beispielsweise wird in der EP 2 708 914 A1 der gepulste Sendelichtstrahl einer Lichtquelle mit einem MEMS-Spiegel in X-Richtung und Y-Richtung über die abzutastende Fläche geführt. Die reflektierten Lichtpulse werden von einer SPAD-Matrix empfangen. Schließlich gibt es 3D-Lichtaufzeitkameras, die simultan eine Vielzahl von Lichtlaufzeitmessungen in ihren Pixeln durchführen.

Neben ausreichender Empfindlichkeit ist eines der Probleme, mit denen derartige Sensoren umgehen müssen, die Koexistenz untereinander. Beispielsweise werden mehrere optoelektronische Sensoren an Anlagen im industriellen Umfeld montiert, oder sie werden in der Intralogistik eingesetzt, um autonome Fahrzeuge bei der Navigation zu unterstützen und Kollisionen zu vermeiden. Dabei können sich ohne Weiteres gleich mehrere weitere Sensoren im Sichtfeld eines jeweiligen Sensors befinden, so dass das eigene Sendelicht sich mit dem Sendelicht der anderen Sensoren überlagert.

Eine derartige gegenseitige Beeinflussung von gleichartigen, aber auch anderen optischen Sensoren führt zu Fehlmessungen, wenn keine Maßnahmen getroffen werden, um das Licht von einem anderen Sensor und das eigene Sendelicht zu unterscheiden oder zu entkoppeln.

Eine Möglichkeit hierfür ist, das Sendelicht zu codieren und auf diese Weise das eigene Sendelicht verlässlich herauszufiltern. Die EP 2 626 722 B1 beispielsweise offenbart einen Laserscanner, der seinen Abtaststrahl mit einer Pseudozufallscodefolge moduliert und Lichtlaufzeiten durch Korrelation mit der Pseudozufallscodefolge misst. Die Pseudocodefolgen werden entweder dicht aufeinanderfolgend oder im Abstand festgelegter Messperioden ausgesandt. Das Messen mit Codefolgen ist aber aufwändig und im Zusammenhang mit SPADs nicht gut nutzbar, weil bereits der erste empfangene Anteil der Codefolge das SPAD in seine Totzeit versetzen würde und somit die Codefolge allenfalls über eine Vielzahl von SPADs rekonstruiert werden könnte, die dann aber nicht mehr für eine verbesserte Orts- und Abstandsauflösung zur Verfügung stehen.

Eine andere bekannte Maßnahme ist, die Messzeitpunkte zufällig zu verschieben. Damit wird Fremdlicht eines anderen Systems nicht mehr systematisch zu einem selben Zeitpunkt registriert. Besonders vorteilhaft sind solche Verzögerungen, die auch als künstlicher zeitlicher Jitter bezeichnet werden können, im Zusammenhang mit statistischen Verfahren oder Pulsmittelungsverfahren. Dabei beruht ein Abstandswert auf einer Vielzahl von Einzelmessungen mit jeweils einem Lichtpuls, die dann anschließend gemeinsam ausgewertet werden, sei es auf Ebene der Empfangssignale durch Aufaddieren oder Mitteln oder durch statistische Auswertung von gesammelten Einzellichtlaufzeiten. Der Jitter, der bekannt ist und im Empfangssignal kompensiert wird, sorgt dann dafür, dass Störer über die Zeit verteilt werden und sich ausmitteln, während das Nutzsignal systematisch am selben Zeitpunkt verbleibt und dadurch konstruktiv anwächst. Dieses Vorgehen ist auch mit SPAD-Systemen möglich.

Problematisch an diesem Vorgehen ist, dass die Verjitterung tatsächlich gar nicht zufällig ist, so dass baugleiche Systeme untereinander doch nur bedingt unabhängig sind. Offensichtlich ist das für den Fall, dass die jeweiligen Verzögerungen aus einer vorgegebenen Tabelle ausgelesen werden. Aber auch ein Pseudozufallsgenerator erzeugt in Wahrheit eine deterministische Abfolge. Prinzipiell gibt es die Lösung, einen echten Zufallsgenerator zu verwenden, oder auch einen mächtigen Pseudozufallsgenerator, der beispielsweise eine Seriennummer, einen Einschaltzeitpunkt oder dergleichen als Seed verwendet und dann für alle praktischen Belange zufällige Zahlen erzeugt. Das bedeutet aber einen enormen Aufwand.

Die EP 3 355 078 A1 offenbart einen optoelektronischen Sensor mit Lichtlaufzeitmessung durch SPADs und nutzt eines oder einige davon als Zufallsgenerator für die Verjitterung. Es ist aber nicht unter allen Umgebungsbedingungen klar, ob damit Zufallszahlen ausreichender Güte gewonnen werden. Das Verfahren funktioniert nur, wenn überhaupt SPADs verwendet werden, und auch dann lässt die Architektur nicht immer zu, einige davon zum Zwecke der Zufallszahlenerzeugung zu nutzen.

DE 10 2010 061 194 A1 offenbart ein Lichtgitter, das seine Strahlen zyklisch aktiviert. Dabei wird das Sendemuster gezielt gestört, um zu erkennen, ob womöglich ein Lichtempfänger von einem Fremdsystem statt dem eigenen zugeordneten Lichtsender beleuchtet wird. Das ist jedoch eine Lösung speziell für Lichtgitter, und zudem wäre für eine Lichtlaufzeitmessung die Erkenntnis, dass es ein störendes Fremdsystem gibt, nur ein erster Schritt, denn das eigentliche Ziel ist, trotz des Fremdsystems verlässlich weiterzumessen.

Aus der US 10 088 559 B1 ist ein LIDAR-System mit einer adaptiven Pulsrate bekannt. In einer Ausführungsform wird ein Lichtpuls ausgesandt, sobald der vorige Lichtpuls empfangen wurde. Der Sendezeitpunkt ist gegenüber dem vorigen Empfangszeitpunkt noch um Signallaufzeiten durch das LIDAR-System verzögert. Die Pulsrate kann außerdem in Abhängigkeit von der Richtung variiert werden, also beispielsweise in Fahrtrichtung eines Fahrzeugs mit geringerer Pulsrate gemessen werden als zu dessen Seiten.

Die US 2007/0181810 A1 offenbart ein Lidar-System für ein Fahrzeug mit einem VCSEL-Array, mit dem Scanstrahlen in verschiedene Richtungen erzeugt werden.

Es ist daher Aufgabe der Erfindung, die Robustheit einer Lichtlaufzeitmessung zu verbessern.

Diese Aufgabe wird durch einen optoelektronischen Sensor und ein Verfahren zur Erfassung und Abstandsbestimmung von Objekten nach von Anspruch 1 beziehungsweise 14 gelöst. Ein gattungsgemäßer, mittels Lichtlaufzeitverfahren Entfernungen messender Sensor umfasst einen Lichtsender und einen Lichtempfänger, um Lichtpulse in den Überwachungsbereich auszusenden und aus den von angetasteten Objekten zurückgeworfenen Lichtpulsen ein Empfangssignal zu erzeugen. Eine Steuer- und Auswertungseinheit bestimmt die zeitliche Position des Empfangspulses in dem Empfangssignal und daraus gemeinsam mit dem bekannten Sendezeitpunkt die Lichtlaufzeit und schließlich durch Umrechnung über die Lichtgeschwindigkeit den gesuchten Abstand.

Die Erfindung geht von dem Grundgedanken einer ereignisgesteuerten zeitlichen Abfolge aufeinanderfolgender Messungen aus. Auslöser für das Aussenden eines weiteren Lichtpulses und damit eine nachfolgende Messung ist der Empfang des vorhergehenden Lichtpulses. Die Messintervalle sind folglich durch die jeweils gemessene Lichtlaufzeit bestimmt. Herkömmlich werden stattdessen gleichmäßige Messfenster festgelegt, beispielsweise anhand der Lichtlaufzeit bis zur maximalen Reichweite und zurück. Das drückt sich dann in einer regelmäßigen zeitlichen Abfolge beziehungsweise einer vorgegebenen Pulswiederholfrequenz aus. Erfindungsgemäß dagegen legt das jeweils angetastete Objekt den Zeitpunkt der nächsten Messung dynamisch oder ereignisbasiert fest.

Die Erfindung hat den Vorteil, dass die Messabfolge nicht mehr starr ist, weil sie auf der aktuellen Szenerie beruht. Dadurch wird der Zeitablauf in jeder Messsituation auf eine andere Weise durcheinandergemischt. Werden Lichtpulse eines anderen Sensors oder sonstigen Störers als Fremdlicht erfasst, so werden diese Fremdlichtpulse innerhalb der Messung zu unterschiedlichen Zeitpunkten registriert, statt sich wie bei gleichmäßigen Messwiederholungen konstruktiv zu einer Fehlmessung zu überlagern. Gerade in einem hochdynamischen Umfeld, wie im Falle von autonomen Fahrzeugen, weichen daher mehrere solche Sensoren einander automatisch durch eine effektiv gänzlich unsystematische und unabhängige Verjitterung der Sendezeitpunkte aus. Die Detektion wird deshalb robuster, die gegenseitige Beeinflussung der Sensoren ist wirkungsvoll unterdrückt.

Die Steuer- und Auswertungseinheit ist bevorzugt dafür ausgebildet, nacheinander eine Vielzahl von Lichtpulsen auszusenden, die jeweilige Lichtlaufzeit bis zum Empfang des in dem Überwachungsbereich remittierten Lichtpulses zu bestimmen und die Lichtlaufzeiten statistisch auszuwerten. Dieses Vorgehen wird auch als Pulsmittelungsverfahren bezeichnet. Jeder Abstandswert basiert dabei auf einer Vielzahl von Einzelmessungen, was besonders im Falle hoher Reichweiten, starker Fremdlichtbelastung und allgemein schlechtem Signal-Rauschverhältnis zu besseren Messergebnissen führt. Störereignisse treten in den Einzelmessungen zu unterschiedlichen Zeitpunkten auf, Messereignisse nicht, so dass die Mittelung die Störereignisse im Verhältnis zu den Messereignissen dämpft. Die erfindungsgemäße ereignisbasierte Messabfolge sorgt dafür, dass auch Störereignisse durch Fremdlicht eines baugleichen anderen Sensors in einer unsystematischen, von der Szenerie abhängigen Weise über die Zeit verteilt oder verjittert sind.

Die Steuer- und Auswertungseinheit ist bevorzugt dafür ausgebildet, mindestens einen Lichtpuls zu einem Zeitpunkt auszusenden, der durch den Empfang des vorhergehenden Lichtpulses bestimmt ist. Damit legt der Empfangszeitpunkt des vorherigen Lichtpulses den Sendezeitpunkt des nächsten Lichtpulses fest. Das bedeutet aber nicht zwangsläufig, dass diese beiden Zeitpunkte übereinstimmen. Schon wegen unvermeidlicher interner Signallaufzeiten und Reaktionszeiten gibt es einen gewissen Zeitversatz. Wie später noch erläutert, kommt eine künstliche Verzögerung hinzu. Das ändert aber nichts daran, dass der Empfangszeitpunkt der zeitliche Anker ist, auf den derartige Verzögerungen bezogen sind. Vorzugsweise werden alle Messungen, jedenfalls bis auf einen ersten Startzeitpunkt, durch Empfang des Lichtpulses und damit Abschluss der vorigen Messung ausgelöst. Aber auch wenn nur eine Messung oder einzelne Messungen auf diese Weise ereignisbasiert angestoßen werden, verschiebt sich das Zeitverhalten aller nachfolgenden Messungen im Vergleich zu einem regelmäßigen Zeitraster und bricht damit eine mögliche Korrelation auf. Es ist also denkbar, für gewisse Zeitabschnitte von der ereignisbasierten Abfolge abzuweichen und dennoch die erfindungsgemäßen Vorteile zu verwirklichen.

Der Lichtempfänger weist bevorzugt mehrere Lichtempfangselemente auf, um Abstandswerte für Objekte in verschiedenen Richtungen zu bestimmen. Das können mehrere diskrete Lichtempfänger sein, vorzugsweise sind es aber Pixel eines Bildsensors, die einzeln oder als Gruppe ein Lichtempfangselement bilden. Um eine Ortsauflösung in einer Dimension zu gewinnen wie bei einem herkömmlichen Laserscanner, ist vorzugsweise eine Zeilenanordnung von Lichtempfangselementen vorgesehen. Diese Zeilenanordnung kann aus mehreren Zeilen bestehen, gerade wenn mehrere Pixel gemeinsam als Gruppe ein Lichtempfangselement bilden.

Die Lichtempfangselemente weisen bevorzugt jeweils mindestens eine Lawinenphotodiode auf, die jeweils mit einer Vorspannung oberhalb einer Durchbruchspannung vorgespannt und somit in einem Geiger-Modus betrieben ist. Wie schon einleitend diskutiert, ist bei der Entfernungsmessung die hohe Empfindlichkeit und Dynamikkompression von Lawinenphotodiodenelementen im Geiger-Modus beziehungsweise SPADs besonders vorteilhaft. SPADs haben aber einige Eigenheiten, und die Erfindung schafft auch für diese besonderen Detektoren die gewünschte Robustheit der Messung gegen Fremdsysteme und Störer. Bei SPADs ist es vorteilhaft, sie gruppenweise zu einem Lichtempfangselement zusammenzufassen und gemeinsam beispielsweise über ein Summensignal auszuwerten.

Die Steuer- und Auswertungseinheit weist vorzugsweise mindestens einen TDC (Timeto-Digital Converter) auf. Das ist ein bekanntes und relativ einfaches Bauteil, das mit hoher zeitlicher Auflösung Einzellichtlaufzeiten bestimmen kann. TDCs können direkt monolithisch in einem Kristall des Lichtempfängers integriert werden. Der TDC wird vorzugsweise zum Sendezeitpunkt gestartet und zum Empfangszeitpunkt durch den empfangenen Lichtpuls gestoppt.

Lichtempfänger und/oder Steuer- und Auswertungseinheit sind bevorzugt dafür ausgebildet, jeweils nacheinander mit einem Lichtempfangselement einen Lichtpuls zu empfangen. Der Lichtempfänger wird also sequentiell betrieben, in Analogie zu einem Laserscanner, und nicht parallel wie bei einer Kamera. Vorzugsweise werden Lichtempfangselemente, die jeweils gerade nicht an der Reihe sind, nicht nur nicht ausgelesen, sondern inaktiv geschaltet. Bei SPADs ist das dadurch möglich, dass die Biasspannung unter die Durchbruchspannung abgesenkt wird. Dadurch kommt es auch nicht zu Fremdlicht- oder Dunkelereignissen, aufgrund derer das Lichtempfangselement dann noch in Totzeit ist, wenn es dann aktiv geschaltet wird. Außerdem reduziert das die Leistungsaufnahme des Lichtempfängers.

Der Lichtsender ist bevorzugt dafür ausgebildet, den von dem Lichtempfänger beobachteten Überwachungsbereich insgesamt auszuleuchten. Es handelt sich also um eine Flächenbeleuchtung, oder im Falle eines zeilenförmigen Lichtempfängers um eine Zeilenbeleuchtung.

Der Lichtsender ist alternativ dafür ausgebildet, nacheinander jeweils nur einen Teilbereich des Überwachungsbereichs auszuleuchten. Der Teilbereich entspricht bevorzugt gerade dem Erfassungsbereich eines Lichtempfangselements, aber es ist auch denkbar, dieses mehr oder weniger deutlich zu überstrahlen.

Der Lichtsender weist bevorzugt eine Zeilenanordnung von Lichtquellen auf. Diese Lichtquellen werden scharf in den Überwachungsbereich projiziert und treffen damit auf ein zugeordnetes Lichtempfangselement. Es entstehen Paare von Lichtquellen und Lichtempfangselementen als Einzelentfernungsmesssystem, die sequentiell durchgeschaltet werden können. Alternativ ist der Lichtsender dafür ausgebildet, die Richtung zu ändern, in die Lichtpulse ausgesandt werden. Dafür wird ein mikromechanisches System wie ein MEMS-Spiegel oder eine besondere Ansteuerung benutzt wie bei einem optical phased array. Zumindest in den Grenzen der möglichen Ablenkung kann damit der Lichtsender jeweils nacheinander einem anderen Lichtempfangselement zugeordnet werden.

Der Sensor ist vorzugsweise als Laserscanner ausgebildet und weist eine drehbare Ablenkeinheit zur periodischen Abtastung des Überwachungsbereichs auf. In dieser Ausführungsform wird die erfindungsgemäße ereignisgesteuerte Messabfolge in einem herkömmlichen Laserscanner mit beweglicher Abtastmechanik eingesetzt. Es ist denkbar, einen einzelnen Abtaststrahl zu verwenden. Vorzugsweise misst ein solcher Laserscanner mit einem Pulsmittelungsverfahren. Vorzugsweise wird mit einer Zeilenanordnung gescannt, so dass nicht nur eine Abtastebene, sondern ein Raumbereich erfasst wird. In der Zeilenanordnung können die Abtaststrahlen auch zueinander einen Winkel aufweisen, statt parallel zu verlaufen, und auf diese Weise einen noch größeren Elevationswinkelbereich abdecken. Die drehbare Ablenkeinheit ist je nach Ausführungsform ein Drehspiegel, insbesondere Polygonspiegelrad, zur periodischen Strahlablenkung bei stationär angeordnetem Lichtsender und Lichtempfänger, oder alternativ eine mitdrehende Ablenkeinheit mit Lichtsender und Lichtempfänger.

Die Steuer- und Auswertungseinheit ist bevorzugt dafür ausgebildet, bei Bestimmung eines Abstandswerts in einer neuen Richtung den nächsten Lichtpuls zu einem Zeitpunkt auszusenden, der durch den Empfang des vorhergehenden Lichtpulses bestimmt ist. Die ereignisgesteuerte Messabfolge betrifft hier nicht die Einzelmessungen, die gemeinsam zu einem Abstandswert verrechnet werden, sondern den Übergang von einer Abstandsmessung in einer Richtung auf die nächste Abstandsmessung in einer neuen Richtung, etwa dem sequentiellen Weiterschalten zum nächsten Lichtempfangselement oder bei einem bewegten Laserscanner die nächste Messung für den nächsten Winkelbereich. Diese nächste Messung erhält durch das Auslösen anhand der vorigen Messung einen individuellen Zeitversatz.

Die Steuer- und Auswertungseinheit ist bevorzugt dafür ausgebildet, eine vorgegebene Anzahl von Lichtpulsen in eine Richtung auszusenden, daraus einen Abstandswert zu bestimmen und dann die Richtung zu wechseln. Das kombiniert ein Pulsmittelungsverfahren mit einem scannenden Verfahren. Es wird also m-mal pro Richtung oder Kanal gemessen und dann die Richtung oder der Kanal n-mal gewechselt. Jede neue Messung, sei es die nächste der m Einzelmessungen in einem Kanal oder der nächste der n Kanäle, kann ereignisgesteuert durch das Ende der vorigen Messung beziehungsweise deren Empfang eines Lichtpulses oder auf andere Weise, etwa durch Vorgabe eines festen Messintervalls gesteuert sein. Erfindungsgemäß ist zumindest einer dieser Übergänge ereignisgesteuert, vorzugsweise sind dies zahlreiche oder alle Übergänge.

Die Steuer- und Auswertungseinheit ist erfindungsgemäß dafür ausgebildet, Lichtpulse in wechselnde Richtungen auszusenden, bis nach und nach in alle zu erfassenden Richtungen eine vorgegebene Anzahl von Lichtpulsen ausgesandt ist. Hier wird das regelmäßige Raster des Vorabsatzes mit m Messungen je Kanal und anschließendem Kanalwechsel durchmischt, um eine noch bessere Verjitterung zu erzielen. Statt direkt nacheinander alle m Messungen eines Kanals durchzuführen, wird zwischen den Kanälen gewechselt, zumindest für einige und vorzugsweise für alle Kanäle. Die Abfolge kann fest vorgegeben oder pseudozufällig sein. Es entsteht nach m mal n Messungen in beliebiger Verteilung ein Histogramm über die verschiedenen Richtungen oder Kanäle, das im Anschluss ausgewertet wird, um für jede Richtung einen Abstandswert zu erhalten. In dieser Ausführungsform ergeben sich weitere Freiheitsgrade, um bezogen auf denselben Kanal ein anderes Zeitverhalten zu erzielen und damit eine Korrelation zu einem Störer aufzubrechen. Nachteilig ist, dass Speicher für alle Einzelmessungen beziehungsweise das Histogramm vorgehalten werden muss, was bei sequentieller Kanalfolge nicht erforderlich wäre.

Die Steuer- und Auswertungseinheit ist bevorzugt dafür ausgebildet, das Aussenden des nächsten Lichtpulses zusätzlich zu verzögern. Diese Verzögerung überlagert sich mit der Durchmischung des Zeitverhaltens aufgrund der ereignisgesteuerten Messabfolge. Dadurch wird es nochmals deutlich unwahrscheinlicher, dass ein Störer systematisch zum selben Zeitpunkt auftritt und fälschlich als Messobjekt erkannt wird. Die zusätzliche Verzögerung entspricht vorzugsweise dem herkömmlichen Vorgehen einer zufälligen oder pseudozufälligen Verzögerung mittels Nachschlagtabelle oder Pseudozufallsgenerator. Als zusätzliche Verzögerung kann auch ein echter oder unechter Bruchteil einer früheren Abstandsmessung herangezogen werden, also einer weiteren unkorrelierten und dynamisch veränderlichen Größe. Alle diese zusätzlichen Verzögerungen überlagern sich mit der erfindungsgemäßen ereignisgesteuerten zeitlichen Bindung an den Empfang eines Lichtpulses.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit Linienbeleuchtung;
- Fig. 2: eine schematische Darstellung eines optoelektronischen Sensors mit einer Zeilenanordnung von Lichtquellen;
- Fig. 3: eine schematische Darstellung eines optoelektronischen Sensors mit ablenkbarem Sendelichtstrahl;
- Fig. 4: eine schematische Darstellung eines Laserscanners;
- Fig. 5: eine schematische Darstellung eines Messablaufs mit durch Empfang eines Lichtpulses ausgelöstem Aussenden eines nachfolgenden Lichtpulses;
- Fig. 6: eine schematische Darstellung des Messablaufs gemäß Figur 5 mit zusätzlicher insbesondere zufälliger Verzögerung des Aussendens des nachfolgenden Lichtpulses;
- Fig. 7: eine schematische Darstellung des Messablaufs bei Messungen in mehreren Richtungen beziehungsweise Kanälen, wo die jeweils nächste Messung durch das Ende der vorigen Messung ausgelöst wird; und
- Fig. 8: eine schematische Darstellung ähnlich Figur 7, jedoch zusätzlich mit mehreren Einzelmessungen je Richtung beziehungsweise Kanal, die gemeinsam zu einem Abstandswert ausgewertet werden, wobei in den Einzelmessungen das Empfangen eines Lichtpulses das Aussenden des nachfolgenden Lichtpulses auslöst.

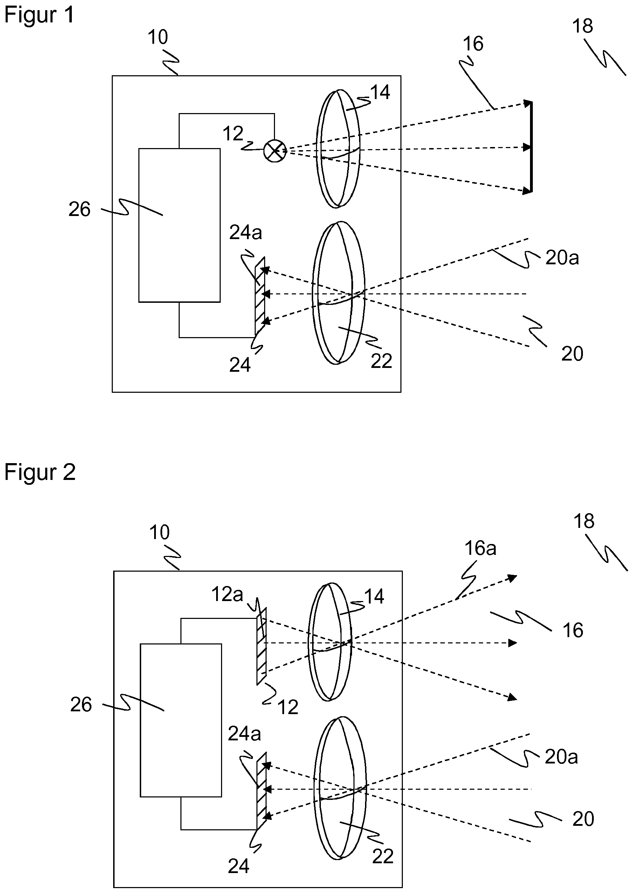

Figur 1 zeigt eine vereinfachte schematische Blockdarstellung eines optoelektronischen Sensors 10 zur Messung von Abständen mittels eines Lichtlaufzeitverfahrens. Ein Lichtsender 12, beispielsweise eine LED oder eine Laserlichtquelle, sendet über eine Sendeoptik 14 Lichtpulse 16 in einen Überwachungsbereich 18 aus. Bei der Ausführungsform gemäß Figur 1 wird eine Linienbeleuchtung erzeugt, später bei anderen Ausführungsformen wird dies variiert.

Trifft ein Lichtpuls 16 auf ein Objekt, so kehrt ein reflektierter oder remittierter Lichtpuls 20 über eine Empfangsoptik 22 zu einem Lichtempfänger 24 zurück. Dieser Lichtempfänger 24 weist eine Vielzahl von Lichtempfangselementen 24a auf. Jedes dieser Lichtempfangselemente 24a beobachtet nur einen Teil des linienförmig von dem Lichtsender 12 beleuchteten Überwachungsbereichs 18, empfängt also nur einen remittierten Lichtpuls 20a aus einer bestimmten Richtung. Es ist möglich, die remittierten Lichtpulse 20a aus den verschiedenen Richtungen gleichzeitig zu empfangen wie bei einer Lichtlaufzeitkamera. Der Sensor 10 ist aber vorzugsweise ein Solid-State-Scanner, der die Lichtempfangselemente 24a sequentiell aktiviert oder ausliest. Dabei bilden die Lichtempfangselemente 24a vorzugsweise eine Empfangszeile, um insgesamt einen Winkelausschnitt einer Ebene als Überwachungsbereich 18 abzutasten, wobei die von dem Lichtsender 12 erzeugte Linie den insgesamt erfassten Winkelausschnitt der Ebene beleuchtet oder gegebenenfalls auch in gewissem Maße überstrahlt. Ein nicht einschränkendes Zahlenbeispiel ist eine Anordnung von 256 Lichtempfangselementen 24a, die gemeinsam einen Öffnungswinkel von 90° abdecken. Andere Anzahlen und Öffnungswinkel, aber auch eine Matrixanordnung mit Ausdehnung quer zur Zeilenrichtung und Erfassung eines Raumabschnitts ist bei entsprechender Anpassung von Lichtsender 12 und Sendeoptik 14 als Flächenbeleuchtung auch vorstellbar.

Die Lichtempfangselemente 24a sind vorzugsweise von Lawinenphotodiodenelementen im Geigermodus oder SPADs gebildet, wobei auch mehrere SPADs gemeinsam als Gruppe beispielsweise über deren Summensignal oder sonstige Kombination zu einem Lichtempfangselement 24a zusammengefasst sein können. SPADs lassen sich besonders vorteilhaft darüber deaktivieren, dass die Biasspannung unter die Schwelle der Durchbruchspannung abgesenkt wird. Sie verlieren dann um mehrere Größenordnungen an Empfindlichkeit und können deshalb als ausgeschaltet angesehen werden. Das Inaktivschalten hat auch den Vorteil, dass keine unnötigen Lawinen ausgelöst werden, die zur Stromaufnahme und Wärmeentwicklung beitragen. So ist bei einem sequentiellen Scanvorgang möglich, die Lichtempfangselemente 24a selektiv nacheinander zu aktivieren und damit die Leistungsaufnahme des Lichtempfängers 24 zu begrenzen. Es ist aber auch unabhängig von der konkreten Technologie des Lichtempfängers 24 möglich, die nicht benötigten Lichtempfangselemente 24a aktiv zu lassen und lediglich deren Empfangssignal nicht auszulesen oder in der Auswertung nicht zu beachten. Auch eine Mehrfachanordnung von diskreten Photodioden oder APDs oder auch ein anderer Bildsensor ist folglich als Alternative zu SPADs denkbar.

Eine Steuer- und Auswertungseinheit 26 bestimmt anhand der Empfangssignale der Lichtempfangselemente 24a die Lichtlaufzeit und daraus den Abstand zum jeweils angetasteten Objektpunkt, von dem der remittierte Lichtpuls 20a zurückgeworfen wurde. Eine beispielhafte Umsetzung basiert auf einem oder mehreren TDCs (Time-to-Digital Converter), der durch den ausgesandten Lichtpuls 16 gestartet und durch den empfangenen remittierten Lichtpuls 20a gestoppt wird. Die Steuer- und Auswertungseinheit 26 kann abweichend von der Darstellung zumindest teilweise gemeinsam mit dem Lichtempfänger 24 ausgebildet sein, beispielsweise indem ein oder mehrere TDCs auf dem Lichtempfänger 24 vorgesehen sind. Dann wird die verfügbare Fläche eines gemeinsamen Chips (z.B. ASIC, Application-Specific Integrated Circuit) zwischen lichtempfindlichen Bereichen der Lichtempfangselemente 24a und ihnen einzeln, in Gruppen oder gemeinsam zugeordnete Schaltkreise zu deren Auswertung und Ansteuerung aufgeteilt.

Gerade im Zusammenhang mit SPADs, die auch bei einem minimalen Stör- oder Dunkelereignis einen starken Puls im Empfangssignal erzeugen, aber auch sonst insbesondere im Falle eines erwarteten schlechten Signal-Rauschverhältnisses basiert die Messung eines Abstandswerts vorzugsweise nicht auf nur einer Messung der Lichtlaufzeit, sondern auf einer statistischen Auswertung einer Vielzahl von beispielsweise 1000 Einzelmessungen mit jeweils einem ausgesandten und wieder empfangenen Lichtpuls 16, 20a.

Es entsteht damit eine Zeitabfolge der ausgesandten Lichtpulse 16, wobei diese Zeitabfolge je nach Ausführungsform durch Messwiederholungen für eine aktualisierte oder über die Zeit verfolgte Messung eines Abstands, mehrere Einzelmessungen zur statistischen Bestimmung eines Abstandswerts und/oder Messung in verschiedene Richtungen entsteht. Wenn diese Zeitabfolge regelmäßig ist, kann es passieren, dass ein Störer, insbesondere ein anderes pulsbasiertes oder sogar baugleiches System, als Scheinobjekt erfasst wird oder jedenfalls die Messung erheblich verfälscht. Damit kann in der Anwendung, in welcher der Sensor 10 eingesetzt ist, ein Fehler oder eine unnötige Unterbrechung verursacht werden, beispielsweise ein Objekt falsch sortiert, klassifiziert oder verarbeitet werden oder ein autonomes Fahrzeug, dessen Navigation und Kollisionsüberwachung auf dem Sensor 10 basiert, muss anhalten und den Transportablauf behindern oder verursacht gar einen Unfall. Je nach Anwendung, speziell im Falle von autonomen Fahrzeugen, können sich im Sichtbereich eines Sensors 10 ohne Weiteres bis zu zehn andere pulsbasierte Sensoren befinden.

Um eine solche gegenseitige Beeinflussung zu verhindern, soll die Zeitabfolge variiert oder verschmiert werden, oder anders ausgedrückt ein künstlicher Zeitjitter eingeführt werden. Dies soll auf eine einerseits kontrollierte Weise geschehen, damit die Steuer- und Auswertungseinheit 26 den Jitter kompensieren kann, andererseits von außen möglichst variabel und damit unkorreliert mit jeglichen denkbaren Störquellen sein, damit eine gegenseitige Beeinflussung wirkungsvoll unterdrückt wird.

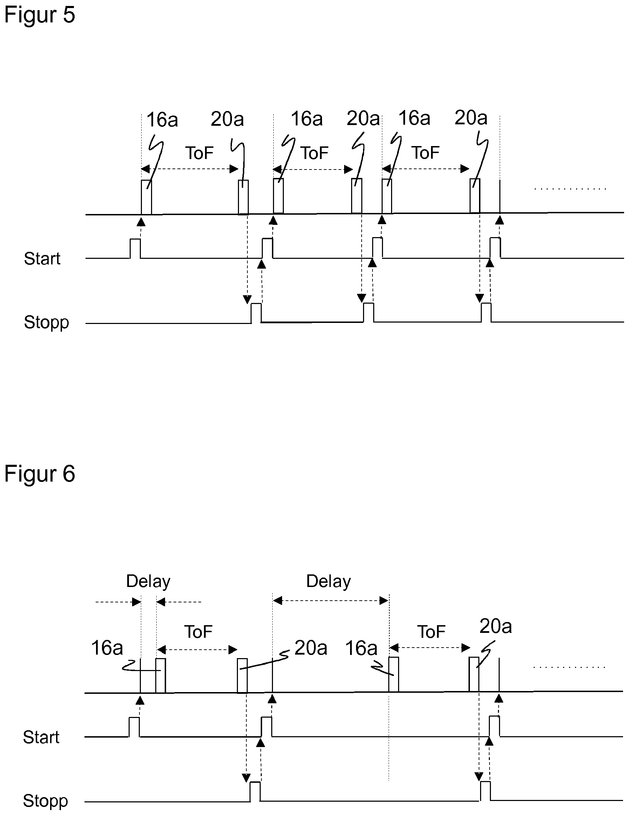

Bevor das erfindungsgemäße Vorgehen für derartige unregelmäßige Zeitabfolgen anhand der Figuren 5 bis 8 erläutert wird, werden noch unter Bezugnahme auf die Figuren 2 bis 4 andere Ausführungsformen des optoelektronischen Sensors 10 vorgestellt. Denn die in Figur 1 dargestellte Anordnung ist rein beispielhaft zu verstehen. Es sind neben den schon genannten Variationsmöglichkeiten, die auch bei den weiteren Ausführungsformen denkbar sind, alternativ optische Aufbauten bekannt, etwa statt der biaxialen Sende- und Empfangspfade ein koaxialer Aufbau in Autokollimationsanordnung etwa mit einem Strahlteiler und einer gemeinsamen Optik oder einer Anordnung des Lichtsenders 12 vor dem Lichtempfänger 24. Die Sendeoptik 14 und die Empfangsoptik 22 sind nur schematisch als Einzellinse dargestellt, es ist hier jede an sich bekannte Optik einsetzbar.

Figur 2 zeigt eine vereinfachte schematische Blockdarstellung einer weiteren Ausführungsform des optoelektronischen Sensors 10 zur Messung von Abständen mittels eines Lichtlaufzeitverfahrens. Im Gegensatz zu Figur 1 ist hier als Lichtsender keine Linien- oder Flächenbeleuchtung eingesetzt, sondern eine Vielzahl von einzeln oder gruppenweise ansteuerbaren Einzellichtquellen 12a, beispielsweise eine VCSEL-Zeile. Andere Einzellichtquellen 12a, wie LEDs oder Kantenemitter, sind ebenso denkbar.

Dieser Lichtsender 12 erzeugt über die jeweils aktivierten Einzellichtquellen 12a in bestimmte Richtungen ausgesandte Lichtpulse 16a. Vorzugsweise sind Anordnung der Einzellichtquellen 12a, der Lichtempfangselemente 24a und der Optiken 14, 22 so gewählt, dass jeweils Paare gebildet sind, mit denen der Abstand in eine Richtung gemessen wird. Es wird also mit einer Einzellichtquelle 12a und deren Lichtpuls 16a ein Objektpunkt in einer bestimmten Richtung ausgeleuchtet, und gerade dieser beleuchtete Objektpunkt wird von einem der Einzellichtquelle 12a zugeordneten Lichtempfangselement 24a beobachtet, wobei die Optiken 14, 22 nach Möglichkeit zumindest über einen gewissen Tiefenschärfenbereich für eine scharfe Projektion und Abbildung sorgen. Auf diese Weise wird das Sendelicht deutlich selektiver eingesetzt als bei einer Flächen- oder Linienbeleuchtung.

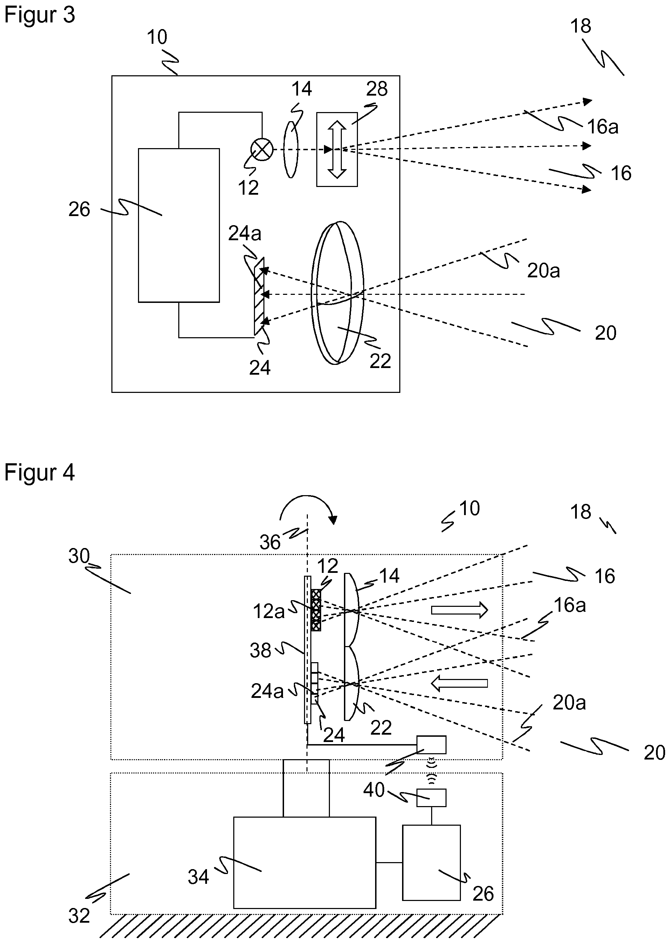

Figur 3 zeigt eine alternative Ausführungsform, um Lichtpulse 16a in bestimmte Richtungen auszusenden. Anstelle der Aktivierung bestimmter Einzellichtquellen 12a aus einer Mehrfachanordnung wie in Figur 2 wird hier dem Lichtsender 12 eine Ablenkeinrichtung 28 zugeordnet, die den Lichtpuls 16a in die jeweils gewünschte Richtung umlenkt. Die konkrete Umsetzung der Ablenkeinrichtung 28 ist nicht festgelegt, beispielsweise handelt es sich um eine bewegliche Mikrooptik wie ein MEMS-Spiegelsystem. Es gibt andere Möglichkeiten, die Richtung von ausgesandtem Licht zu variieren, wie etwa ein optical phased array.

In einer weiteren nicht dargestellten Ausführungsform sind aus Sende- und Empfangsseite jeweils nur ein Einzelsender beziehungsweise ein Einzelempfänger vorgesehen. Damit kann nur in einer Richtung gemessen werden, aber bei Messwiederholungen für statistische Abstandsbestimmungen oder Aktualisierungen des Messwerts treten die angesprochenen Beeinflussungen durch zufällig korrelierte Fremdstörer ebenso auf wie bei einem scannenden, zeilenförmig oder flächig erfassenden System. Außerdem kann eine solche eindimensionale Abtasteinheit auch bewegt werden, wie in einem Laserscanner, um ihren Messbereich zu erweitern.

Figur 4 zeigt eine schematische Schnittdarstellung durch einen optoelektronischen Sensor 10 in einer weiteren Ausführungsform als Laserscanner. Weiterhin bezeichnen gleiche Bezugszeichen die gleichen oder einander entsprechenden Merkmale. Der gezeigte Laserscanner umfasst nicht wie im Vorabsatz nur ein Paar aus einem Lichtsender und Lichtempfänger und damit einen Abtaststrahl, aber das wäre alternativ auch möglich.

Der als Laserscanner ausgebildete Sensor 10 gemäß Figur 4 lässt sich grob in eine bewegliche Abtasteinheit 30 und eine Sockeleinheit 32 aufteilen. Die Abtasteinheit 30 ist der optische Messkopf, während in der Sockeleinheit 32 weitere Elemente wie eine Versorgung, Auswertungselektronik, Anschlüsse und dergleichen untergebracht sind. Im Betrieb wird mit Hilfe eines Antriebs 34 der Sockeleinheit 32 die Abtasteinheit 30 in eine Drehbewegung um eine Drehachse 36 versetzt, um so den Überwachungsbereich 18 periodisch abzutasten.

Die Abtasteinheit 30 weist mindestens ein Abtastmodul mit Lichtsender 12 und Lichtempfänger 24 auf, das in dieser Ausführungsform als vierstrahliges System mit vier Einzellichtquellen 12a und vier Lichtempfangselementen 24a ausgebildet ist. Dieser Aufbau des Abtastmoduls ist rein beispielhaft, im Prinzip können alle zu den Figuren 1 bis 3 vorgestellten Sensoren 10 als mitdrehendes System ein Abtastmodul bilden oder mehrfach als mehrere Abtastmodule vorgesehen werden. Dadurch werden verschiedenste Strahlanordnungen möglich, mit denen der Überwachungsbereich 18 erfasst wird.

Lichtsender 12 und Lichtempfänger 24 sind in dieser Ausführungsform gemeinsam auf einer Leiterkarte 38 angeordnet, die auf der Drehachse 36 liegt und mit der Welle des Antriebs 34 verbunden ist. Dies ist nur beispielhaft zu verstehen, es sind praktisch beliebige Anzahlen und Anordnungen von Leiterkarten denkbar.

Eine berührungslose Versorgungs- und Datenschnittstelle 40 verbindet die bewegliche Abtasteinheit 30 mit der ruhenden Sockeleinheit 32. Dort befindet sich die Steuer- und Auswertungseinheit 26, die zumindest teilweise auch auf der Leiterkarte 38 oder an anderem Ort in der Abtasteinheit 30 untergebracht sein kann. Die Steuer- und Auswertungseinheit 26 steuert neben den schon erläuterten Funktionen auch den Antrieb 34 und erhält das Signal einer nicht gezeigten, von Laserscannern allgemein bekannten Winkelmesseinheit, welche die jeweilige Winkelstellung der Abtasteinheit 30 bestimmt.

Damit wird während eines Umlaufs mit den Lichtpulsen 16a einer jeweiligen Einzellichtquelle 12a eine entsprechende Ebene abgetastet, wobei Messpunkte in Polarkoordinaten aus der Winkelstellung der Abtasteinheit 30 und dem mittels Lichtlaufzeit gemessenen Abstand erzeugt werden. Genaugenommen wird nur bei horizontal ausgesandten Lichtpulsen 16a tatsächlich eine Ebene abgetastet, mit Elevationswinkel ungleich 0° ausgesandte Lichtpulse 16a tasten jeweils die Mantelfläche eines Kegels ab, aber dieser Unterschied ist hier nicht weiter von Relevanz.

Der dargestellte Sensor 10 ist ein Laserscanner mit rotierendem Messkopf als Abtasteinheit 30. Alternativ ist auch eine periodische Ablenkung mittels Drehspiegel oder einem Facettenspiegelrad denkbar. Eine weitere alternative Ausführungsform schwenkt die Abtasteinheit 30 hin und her, entweder um die Drehachse 36 als hin- und herschwenkende Drehbewegung oder zusätzlich um eine zweite Achse senkrecht zur Drehbewegung, um auch in Elevation eine Abtastbewegung zu erzeugen.

In allen erläuterten Ausführungsformen erzeugt der Sensor 10 wiederholt Lichtpulse 16, und deren zeitliche Abfolge wird erfindungsgemäß zusätzlich variiert, also ein zeitlicher Jitter eingeführt, um Beeinflussungen durch Fremdstörer zu unterdrücken. Dazu ist vorgesehen, den jeweils nächsten Lichtpuls 16 nicht wie herkömmlich nach Ablauf einer Messperiode auszusenden, sondern ereignisgesteuert nach Empfang eines remittierten Lichtpulses 20. Die Messperioden haben also eine unterschiedliche Länge je nachdem, wie lange der Lichtpuls unterwegs ist, und dementsprechend abhängig von dem aktuell angetasteten Objektpunkt und damit der konkreten aktuellen Szenerie.

Figur 5 zeigt ein erstes Beispiel eines solchen ereignisgesteuerten Messablaufs, bei dem jeweils der zuletzt empfangene remittierte Lichtpuls 20a den nachfolgenden ausgesandten Lichtpuls 16a auslöst. Konkret sind oben die jeweiligen Lichtpulse 16a, 20a gezeigt, die innerhalb einer Messung gerade den zeitlichen Abstand der gesuchten Lichtlaufzeit haben. Die nächste Messung schließt sich sofort und nicht erst nach Ablauf einer festen Messperiode an, wobei noch gewisse Systemlaufzeiten hier in Form von Pulsbreiten dazwischenliegen. Nur als Auffangstrategie wird der nächste Lichtpuls 16a vorzugsweise nach einer festen Messperiode entsprechend einer maximalen Reichweite ausgesandt, wenn kein vorhergehender remittierender Lichtpuls 20a empfangen wird. Ansonsten würde die Messung nicht weitergehen, wenn sich kein Objekt in Richtung des ausgesandten Lichtpulses 16a befindet.

In der Mitte und unten in Figur 5 sind mit Start und Stopp Signale der Steuer- und Auswertungseinheit 26 zur Ablaufsteuerung der Messung gezeigt. Mit dem Startsignal wird der Lichtsender 12 angesteuert, um die ausgesandten Lichtpulse 16a zu erzeugen. Das Stoppsignal wird aus dem Empfangssignal gewonnen. Ein Empfangspuls im Stoppsignal löst direkt den nächsten Startpuls im Startsignal aus. Damit wird direkt und ereignisgesteuert auf den Empfangspuls hin von Puls n auf Puls n+1 und damit die nächste Messung geschaltet.

Figur 6 zeigt als zweites Beispiel die erfindungsgemäße Variation dieses Messablaufs. Dabei ist dem zu Figur 5 erläuterten ereignisgesteuerten Messablauf noch eine zusätzliche Verzögerung überlagert. Der Startpuls im Startsignal führt also nicht direkt und nur mit den unvermeidlichen Systemverzögerungen zum Aussenden eines nächsten Lichtpulses 16a. Vielmehr wird noch um ein zusätzliches Delay verzögert. Das ändert nichts an der ereignisgesteuerten Messabfolge, da der Empfangszeitpunkt des vorhergehenden Lichtpulses 20a weiterhin den Zeitbezug oder Anker bildet, gegenüber dem lediglich noch zusätzlich verzögert wird.

Das Delay wird von Messung zu Messung variiert und dazu wie bei herkömmlichen Lösungen zur Verjitterung der Sendezeitpunkte aus einer Tabelle ausgelesen oder mit einem Pseudozufallszahlengenerator erzeugt. Eine weitere Möglichkeit, das Delay zu bestimmen, ist das Heranziehen einer früheren Lichtlaufzeitmessung, indem der nächste Lichtpuls 16a zusätzlich zu einer pseudozufälligen Verzögerung oder stattdessen um einen Bruchteil der früheren Lichtlaufzeitmessung gegenüber dem Empfangszeitpunkt des letzten Lichtpulses 20a verzögert wird.

Es überlagern sich erfindungsgemäß folglich der ereignisgesteuerte Messablauf und eine pseudozufällige Verjitterung. Damit wird die Wahrscheinlichkeit nochmals deutlich verringert, dass ein Fremdstörer systematisch als Scheinobjekt bei einer gleichen Lichtlaufzeit wahrgenommen wird, da praktisch ausgeschlossen ist, dass sowohl die über die Ereignissteuerung wirkende Szenerie als auch die Pseudozufallszahlen bei einem Fremdstörer mit dem Messablauf des Sensors 10 übereinstimmen.

Die Abläufe in den Figuren 5 und 6 beziehen sich auf beliebige aufeinanderfolgende Messungen mit Lichtpulsen 16a und 20a. Das können also Messungen sein, die bereits nach Einzelpulsen einen Abstandswert liefern und die zur Aktualisierung des Messwerts wiederholt werden, mehrere Einzelpulse in einem Pulsmittelungsverfahren, bei dem mehrere Einzelmessungen statistisch zur Gewinnung eines Abstandswerts gemeinsam ausgewertet werden, und/oder Messungen in unterschiedlichen Richtungen nach dem Prinzip eines Solid State Scanners.

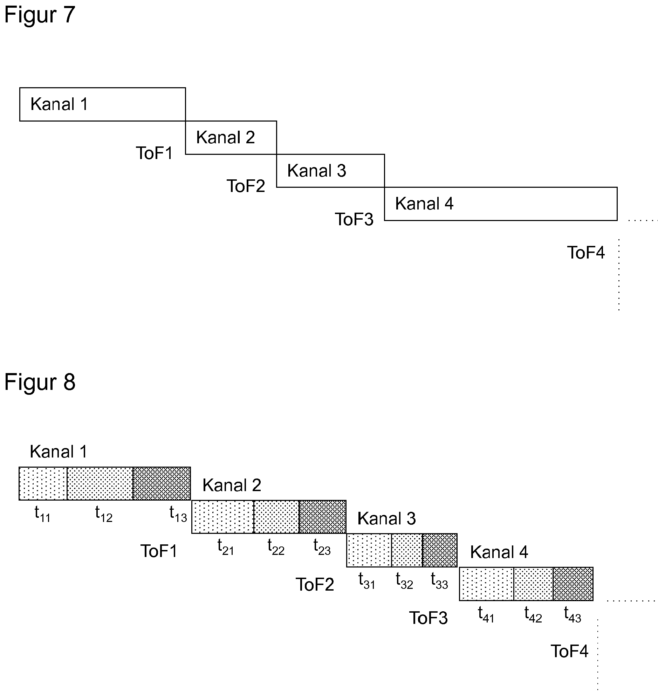

Figur 7 illustriert den Übergang zwischen Messungen in verschiedenen Kanälen eines Solid State Scanners. Die Kanäle bezeichnen die jeweilige Scanrichtung, also welche Einzellichtquelle 12a jeweils aktiv ist beziehungsweise in welche Richtung die Ablenkeinrichtung 28 den ausgesandten Lichtpuls 16a aktuell umlenkt, und dementsprechend welches Lichtempfangselement 24a aktiv ist beziehungsweise ausgelesen wird.

Nach dieser Ausführungsform erfolgt die Umschaltung zwischen den Kanälen ereignisgesteuert durch den Empfang eines remittierten Lichtpulses 20a. Sobald also der letzte, oder auch der einzige, remittierte Lichtpuls 20a empfangen wurde, aus dem der Lichtlaufzeitwert für den Kanal bestimmt wird, beginnt die Messung im nächsten Kanal.

Figur 8 illustriert eine Kombination aus ereignisgesteuerter Messabfolge sowohl innerhalb eines Kanals als auch von Kanal zu Kanal. Dabei werden in jedem Kanal m Einzelmessungen durchgeführt und gemeinsam zu einem Abstandsmesswert verrechnet. In Figur 8 ist vereinfachend m=3, ein realistischeres Zahlenbeispiel ist m=100 oder m=1000. Außerdem wird ein Abstandswert für n Kanäle entsprechend n Scanrichtungen bestimmt. Dargestellt sind die ersten vier Kanäle, ein Zahlenbeispiel ist n=256, wobei n vorzugsweise der Anzahl der nacheinander aktivieren Scanrichtungen mit Hilfe von Einzellichtquellen 12a oder der Ablenkeinrichtung 28 beziehungsweise der nacheinander aktivierten oder ausgelesenen Lichtempfangselemente 24a entspricht.

Die jeweiligen Lichtlaufzeiten tᵢⱼ mit 1=1..m, j=1..n unterscheiden sich innerhalb eines Kanals statistisch, was hier etwas übertrieben dargestellt ist. Die Messperioden innerhalb eines Kanals sind durch den Empfang des jeweiligen Lichtpulses 20a und damit letztlich die dem Objektabstand entsprechenden Lichtlaufzeiten tᵢⱼ bestimmt. Ebenso ist der Übergang auf den nächsten Kanal ereignisgesteuert durch Empfang des jeweils letzten Lichtpulses nach der Lichtlaufzeit tₘⱼ bestimmt.

Es ist denkbar, nur einen Teil dieser Übergänge ereignisgesteuert zu bestimmen und andere durch feste Messperioden. Bereits ein ereignisgesteuerter Übergang bricht die bisherige Systematik für alle nachfolgenden Messungen auf. Die Wahrscheinlichkeit einer systematischen Störung ist aber am geringsten, wenn möglichst viele und vorzugsweise alle Übergänge ereignisgesteuert sind. Außerdem ist denkbar, einige oder alle Übergänge zusätzlich pseudozufällig zu verzögern, wie dies zu Figur 6 vorgestellt wurde.

In einer weiteren Variante erfolgt die Mehrfachmessung der tᵢⱼ über mehrere Kanäle nicht so regelmäßig wie in Figur 8 vom ersten Kanal zum letzten Kanal, sondern die Einzelmessungen werden nach festem oder erneut pseudozufälligem Schema über die Kanäle verteilt, bis überall m Einzelmessungen durchgeführt wurden. Das führt eine zusätzliche Durchmischung ein. Dafür muss Speicher vorgehalten werden, um die tᵢⱼ anschließend auswerten zu können, während bei der regelmäßigeren Messung nach Figur 8 die Auswertung schon für festes i nur innerhalb eines Kanals mit weniger Speicherbedarf erfolgen kann.

## Patentansprüche

1. Optoelektronischer Sensor (10) zur Erfassung und Abstandsbestimmung von Objekten in einem Überwachungsbereich (18), der einen Lichtsender (12) zum wiederholten Aussenden von Lichtpulsen (16), einen Lichtempfänger (24) zum Erzeugen eines Empfangssignals aus einem von Objekten in dem Überwachungsbereich (18) remittierten Lichtpuls (20) sowie eine Steuer- und Auswertungseinheit (26) aufweist, die dafür ausgebildet ist, anhand des Empfangssignals eine Lichtlaufzeit eines ausgesandten und wieder empfangenen Lichtpulses (16, 20) und daraus einen Abstandswert zu bestimmen, sowie durch das Empfangen eines Lichtpulses (20) das Aussenden eines weiteren Lichtpulses (16) auszulösen,
**dadurch gekennzeichnet,**
**dass** die Steuer- und Auswertungseinheit (26) weiterhin dafür ausgebildet ist, das Aussenden des weiteren Lichtpulses (16, 16a) über unvermeidliche Systemverzögerungen hinaus zusätzlich um eine zufällige oder pseudozufällige Verzögerung oder einen Bruchteil einer früheren Lichtlaufzeitmessung zu verzögern.

2. Optoelektronischer Sensor (10) nach Anspruch 1,
wobei die Steuer- und Auswertungseinheit (26) dafür ausgebildet ist,
nacheinander eine Vielzahl von Lichtpulsen (16) auszusenden, die jeweilige Lichtlaufzeit bis zum Empfang des in dem Überwachungsbereich (18) remittierten Lichtpulses (20) zu bestimmen und die Lichtlaufzeiten statistisch auszuwerten.

3. Optoelektronischer Sensor (10) nach Anspruch 1 oder 2,
wobei die Steuer- und Auswertungseinheit (26) dafür ausgebildet ist, mindestens einen Lichtpuls (16) zu einem Zeitpunkt auszusenden, der durch den Empfang des vorhergehenden Lichtpulses (20) bestimmt ist.

4. Optoelektronischer Sensor (10) nach einem der vorhergehenden Ansprüche,
wobei der Lichtempfänger (24) mehrere Lichtempfangselemente (24a) aufweist, um Abstandswerte für Objekte in verschiedenen Richtungen zu bestimmen, insbesondere eine Zeilenanordnung von Lichtempfangselementen (24a).

5. Optoelektronischer Sensor (10) nach Anspruch 4,
wobei die Lichtempfangselemente (24a) jeweils mindestens eine Lawinenphotodiode aufweisen, die jeweils mit einer Vorspannung oberhalb einer Durchbruchspannung vorgespannt und somit in einem Geiger-Modus betrieben ist und/oder wobei die Steuer- und Auswertungseinheit (26) mindestens einen TDC aufweist.

6. Optoelektronischer Sensor (10) nach Anspruch 4 oder 5,
wobei Lichtempfänger (24) und/oder Steuer- und Auswertungseinheit (26) dafür ausgebildet sind, jeweils nacheinander mit einem Lichtempfangselement (24a) einen Lichtpuls (20a) zu empfangen.

7. Optoelektronischer Sensor (10) nach einem der vorhergehenden Ansprüche,
wobei der Lichtsender (12) dafür ausgebildet ist, den von dem Lichtempfänger (24) beobachteten Überwachungsbereich (18) insgesamt auszuleuchten.

8. Optoelektronischer Sensor (10) nach einem der vorhergehenden Ansprüche,
wobei der Lichtsender (12, 12a) dafür ausgebildet ist, nacheinander jeweils nur einen Teilbereich des Überwachungsbereichs (18) auszuleuchten.

9. Optoelektronischer Sensor (10) nach einem der vorhergehenden Ansprüche,
wobei der Lichtsender (12) eine Zeilenanordnung von Lichtquellen (12a) aufweist und/oder dafür ausgebildet ist, die Richtung zu ändern, in die Lichtpulse (16, 16a) ausgesandt werden.

10. Optoelektronischer Sensor (10) nach einem der vorhergehenden Ansprüche, der als Laserscanner ausgebildet ist und eine drehbare Ablenkeinheit (30) zur periodischen Abtastung des Überwachungsbereichs (18) aufweist.

11. Optoelektronischer Sensor (10) nach einem der vorhergehenden Ansprüche,
wobei die Steuer- und Auswertungseinheit (26) dafür ausgebildet ist, bei Bestimmung eines Abstandswerts in einer neuen Richtung den nächsten Lichtpuls (16, 16a) zu einem Zeitpunkt auszusenden, der durch den Empfang des vorhergehenden Lichtpulses (20, 20a) bestimmt ist.

12. Optoelektronischer Sensor (10) nach einem der vorhergehenden Ansprüche,
wobei die Steuer- und Auswertungseinheit (26) dafür ausgebildet ist, eine vorgegebene Anzahl von Lichtpulsen (16, 16a) in eine Richtung auszusenden, daraus einen Abstandswert zu bestimmen und dann die Richtung zu wechseln.

13. Optoelektronischer Sensor (10) nach einem der vorhergehenden Ansprüche,
wobei die Steuer- und Auswertungseinheit (26) dafür ausgebildet ist, Lichtpulse (16, 16a) in wechselnde Richtungen auszusenden, bis nach und nach in alle zu erfassenden Richtungen eine vorgegebene Anzahl von Lichtpulsen (16, 16a) ausgesandt ist.

14. Verfahren zur Erfassung und Abstandsbestimmung von Objekten in einem Überwachungsbereich (18), bei dem wiederholt Lichtpulse (16) ausgesandt werden und aus den von einem Objekt in dem Überwachungsbereich (18) remittierten Lichtpulsen (20) jeweils ein Empfangssignal erzeugt und ausgewertet wird, um eine Lichtlaufzeit und daraus einen Abstandswert zu bestimmen,und wobei durch das Empfangen eines Lichtpulses (20) das Aussenden eines weiteren Lichtpulses (16) ausgelöst wird
**dadurch gekennzeichnet,**
**dass** das Aussenden des weiteren Lichtpulses (16, 16a) über unvermeidliche Systemverzögerungen hinaus zusätzlich um eine zufällige oder pseudozufällige Verzögerung oder einen Bruchteil einer früheren Lichtlaufzeitmessung verzögert wird.

## Claims

1. An optoelectronic sensor (10) for detecting and determining the distance of objects in a monitored area (18), the sensor (10) having a light transmitter (12) for repeatedly transmitting light pulses (16), a light receiver (24) for generating a reception signal from a remitted light pulse (20) that has been remitted by objects in the monitored area (18), and a control and evaluation unit (26) configured to determine a light time of flight of a transmitted and received light pulse (16) on the basis of the reception signal, 20) and to determine a distance value from that, as well as to trigger the transmission of a further light pulse (16) by receiving a light pulse (20),
**characterized in that** the control and evaluation unit (26) is further configured to additionally delay the transmission of the further light pulse (16, 16a) beyond unavoidable system delays by a random or pseudo-random delay or a fraction of a previous light time of flight measurement.

2. The optoelectronic sensor (10) according to claim 1,
wherein the control and evaluation unit (26) is configured to successively transmit a plurality of light pulses (16), to determine the respective light time of flight until reception of the remitted light pulse (20) that has been remitted in the monitoring area (18), and to statistically evaluate the light times of flight.

3. The optoelectronic sensor (10) according to claim 1 or 2,
wherein the control and evaluation unit (26) is configured to transmit at least one light pulse (16) at a time determined by the reception of the preceding light pulse (20).

4. The optoelectronic sensor (10) according to any of the preceding claims,
wherein the light receiver (24) comprises a plurality of light receiving elements (24a) for determining distance values for objects in different directions, in particular a row arrangement of light receiving elements (24a).

5. The optoelectronic sensor (10) according to claim 4,
wherein the light receiving elements (24a) each comprise at least one avalanche photodiode which is biased with a bias voltage above a breakdown voltage and thus operated in a Geiger mode and/or wherein the control and evaluation unit (26) comprises at least one TDC.

6. The optoelectronic sensor (10) according to claim 4 or 5,
wherein light receivers (24) and/or control and evaluation unit (26) are configured to receive a light pulse (20a) one after the other with a light receiving element (24a).

7. The optoelectronic sensor (10) according to any of the preceding claims,
wherein the light transmitter (12) is configured to illuminate the monitoring area (18) observed by the light receiver (24) as a whole.

8. The optoelectronic sensor (10) according to any of the preceding claims,
wherein the light transmitter (12, 12a) is configured to successively illuminate only a partial area of the monitoring area (18) at a time.

9. The optoelectronic sensor (10) according to any of the preceding claims,
wherein the light transmitter (12) comprises a row arrangement of light sources (12a) and/or is configured to change the direction where light pulses (16, 16a) are transmitted.

10. The optoelectronic sensor (10) according to any of the preceding claims,
which is configured as a laser scanner and has a rotatable deflection unit (30) for periodically scanning the monitoring area (18).

11. The optoelectronic sensor (10) according to any of the preceding claims,
wherein the control and evaluation unit (26) is configured, upon determination of a distance value in a new direction, to transmit the next light pulse (16, 16a) at a time determined by the reception of the preceding light pulse (20, 20a).

12. The optoelectronic sensor (10) according to any of the preceding claims,
wherein the control and evaluation unit (26) is configured to transmit a predetermined number of light pulses (16, 16a) in one direction, to determine a distance value therefrom and then to change the direction.

13. The optoelectronic sensor (10) according to any of the preceding claims,
wherein the control and evaluation unit (26) is configured to transmit light pulses (16, 16a) in alternating directions until a predetermined number of light pulses (16, 16a) is transmitted in all directions to be detected.

14. A method for detecting and determining the distance of objects in a monitored area (18), wherein light pulses (16) are repeatedly transmitted and a respective reception signal is generated and evaluated from the remitted light pulses (20) that have been remitted by an object in the monitored area (18) in order to determine a light time of flight and, based on that, a distance value, and wherein the transmission of a further light pulse (16) is triggered by the reception of a light pulse (20),
**characterized in that** the transmission of the further light pulse (16, 16a) is additionally delayed beyond unavoidable system delays by a random or pseudo-random delay or a fraction of a previous light time of flight measurement.

## Revendications

1. Capteur optoélectronique (10) pour détecter et déterminer la distance d'objets dans une zone à surveiller (18), comprenant un émetteur de lumière (12) pour émettre de façon répétée des impulsions lumineuses (16), un récepteur de lumière (24) pour générer un signal de réception à partir d'une impulsion lumineuse (20) réémise par des objets dans la zone à surveiller (18), et une unité de commande et d'évaluation (26) réalisée pour déterminer, sur la base du signal de réception, un temps de parcours de lumière d'une impulsion lumineuse émise et reçue (16, 20) et, à partir dudit temps, une valeur de distance, et pour déclencher l'émission d'une autre impulsion lumineuse (16) par la réception d'une impulsion lumineuse (20),
**caractérisé en ce que**
l'unité de commande et d'évaluation (26) est en outre réalisée pour retarder l'émission de l'autre impulsion lumineuse (16, 16a), au-delà de retards inévitables du système, en supplément d'un retard aléatoire ou pseudo-aléatoire ou d'une fraction d'une mesure précédente du temps de parcours de lumière.

2. Capteur optoélectronique (10) selon la revendication 1, dans lequel l'unité de commande et d'évaluation (26) est réalisée pour émettre successivement une multitude d'impulsions lumineuses (16), pour déterminer le temps de parcours de lumière respectif jusqu'à la réception de l'impulsion lumineuse (20) réémise dans la zone à surveiller (18), et pour évaluer statistiquement les temps de parcours de lumière.

3. Capteur optoélectronique (10) selon la revendication 1 ou 2, dans lequel l'unité de commande et d'évaluation (26) est réalisée pour émettre au moins une impulsion lumineuse (16) à un instant déterminé par la réception de l'impulsion lumineuse précédente (20).

4. Capteur optoélectronique (10) selon l'une des revendications précédentes, dans lequel le récepteur de lumière (24) comprend plusieurs éléments de réception de lumière (24a) afin de déterminer des valeurs de distance pour des objets dans différentes directions, en particulier une disposition en ligne des éléments de réception de lumière (24a).

5. Capteur optoélectronique (10) selon la revendication 4, dans lequel les éléments de réception de lumière (24a) comprennent chacun au moins une photodiode à avalanche qui est polarisée avec une tension de polarisation supérieure à une tension de claquage et qui est ainsi exploitée en mode Geiger, et/ou l'unité de commande et d'évaluation (26) comprend au moins un convertisseur temps numérique (TDC).

6. Capteur optoélectronique (10) selon la revendication 4 ou 5, dans lequel le récepteur de lumière (24) et/ou l'unité de commande et d'évaluation (26) sont réalisés pour recevoir successivement une impulsion lumineuse (20a) avec un élément de réception de lumière (24a).

7. Capteur optoélectronique (10) selon l'une des revendications précédentes, dans lequel l'émetteur de lumière (12) est réalisé pour éclairer dans 'ensemble la zone à surveiller (18) observée par le récepteur de lumière (24).

8. Capteur optoélectronique (10) selon l'une des revendications précédentes, dans lequel l'émetteur de lumière (12, 12a) est réalisé pour n'éclairer successivement qu'une zone partielle de la zone à surveiller (18).

9. Capteur optoélectronique (10) selon l'une des revendications précédentes, dans lequel l'émetteur de lumière (12) présente une disposition en ligne de sources de lumière (12a) et/ou est réalisé pour modifier la direction dans laquelle les impulsions lumineuses (16, 16a) sont émises.

10. Capteur optoélectronique (10) selon l'une des revendications précédentes, qui est réalisé sous forme de scanner laser et qui présente une unité de déviation rotative (30) pour balayer périodiquement la zone à surveiller (18).

11. Capteur optoélectronique (10) selon l'une des revendications précédentes, dans lequel, lors de la détermination d'une valeur de distance dans une nouvelle direction, l'unité de commande et d'évaluation (26) est réalisée pour émettre l'impulsion lumineuse suivante (16, 16a) à un instant déterminé par la réception de l'impulsion lumineuse précédente (20, 20a).

12. Capteur optoélectronique (10) selon l'une des revendications précédentes, dans lequel l'unité de commande et d'évaluation (26) est réalisée pour émettre un nombre prédéterminé d'impulsions lumineuses (16, 16a) dans une direction, pour en déterminer une valeur de distance, et pour ensuite modifier la direction.

13. Capteur optoélectronique (10) selon l'une des revendications précédentes, dans lequel l'unité de commande et d'évaluation (26) est réalisée pour émettre des impulsions lumineuses (16, 16a) dans des directions alternées jusqu'à ce qu'un nombre prédéterminé d'impulsions lumineuses (16, 16a) soit progressivement émis dans toutes les directions à détecter.

14. Procédé pour détecter et déterminer la distance d'objets dans une zone à surveiller (18), dans lequel des impulsions lumineuses (16) sont émises de manière répétée et un signal de réception est généré et évalué respectivement à partir des impulsions lumineuses (20) réémises par un objet dans la zone à surveiller (18), afin de déterminer un temps de parcours de lumière et, sur la base de celui-ci, une valeur de distance, et l'émission d'une autre impulsion lumineuse (16) est déclenchée par la réception d'une impulsion lumineuse (20),
**caractérisé en ce que**
l'émission de l'autre impulsion lumineuse (16, 16a) est retardée, au-delà de retards inévitables du système, en supplément d'un retard aléatoire ou pseudo-aléatoire ou d'une fraction d'une mesure précédente du temps de parcours de lumière.
